# EUROPÄISCHE PATENTSCHRIFT

(11) **EP 2 062 719 B1**
(45) Veröffentlichungstag und Bekanntmachung des Hinweises auf die Patenterteilung: **07.01.2015**
(21) Anmeldenummer: 08020376.3
(22) Anmeldetag: 24.11.2008
(51) Int. Cl.: B29C 47/68

(54) **Siebwechsler**
Screen changer
Changeur de tamis

(30) Priorität: 23.11.2007 DE 102007056594
(43) Veröffentlichungstag der Anmeldung: 27.05.2009
(60) Teilanmeldung: 09166357.5
(73) Patentinhaber: Nordson Holdings S.à r.l. & Co. KG, 40699 Erkrath (DE)
(72) Erfinder: Hartmann, Frank, 48565 Steinfurt (DE)
(74) Vertreter: Habbel, Ludwig

(56) Entgegenhaltungen:
- GB-A- 1 489 148
- GB-A- 1 551 749
- US-A- 3 684 419
- US-A- 4 359 387

## Beschreibung

Die Erfindung betrifft einen Siebwechsler nach dem Oberbegriff des Anspruchs 1, vgl. US 3 684 419 A.

Derartige Siebwechsler sind aus der Praxis bekannt. Sie verwenden eine so genannte Speicherhydraulik, weisen also einen unter Druck setzbaren Speicher für Hydraulikflüssigkeit auf. Dies ermöglicht die Verwendung von Hochdruckpumpen, die bei vergleichsweise geringer Förderleistung pro Zeiteinheit einen vergleichsweise hohen Druck aufzubauen vermögen. Im Hydraulikspeicher wird daher über einen vergleichsweise längeren Zeitraum ein hoher Druck aufgebaut, so dass eine große hydraulische Flüssigkeitsmenge mit dem entsprechend hohen Druck bereitsteht.

Auch aus der US 4 359 387 A oder der GB 1 489 148 A sind gattungsgemäße Siebwechsler bekannt.

Wenn ein Siebwechsel durchgeführt werden soll, kann auf diese Weise der Siebträger mittels der großen Flüssigkeitsmenge um einen großen Verfahrweg innerhalb kurzer Zeit bewegt werden. Wenn der Siebträger zwei Siebe aufweist, kann auf diese Weise ein verschmutztes Sieb aus dem Materialführungskanal bewegt werden und gleichzeitig ein sauberes, eine hohe Durchlässigkeit ermöglichendes Sieb in den Materialkanal eingefahren werden. In dieser Position steht das verschmutzte Sieb in einer Wechselstellung, in der es zugänglich ist und gesäubert werden kann bzw. gegen ein unbenutztes bzw. zuvor gereinigtes Sieb ausgewechselt werden kann.

Allerdings kann die Beweglichkeit des Siebträgers z. B. durch das Anhaften festgebackener Kunststoffreste insofern behindert sein, als ein hoher Verfahrwiderstand zu überwinden ist. Zu diesem Zweck steht die im Hydraulikspeicher bevorratete Flüssigkeitsmenge unter dem erwähnten hohen Druck, der die Überwindung dieser Widerstände ermöglicht.

Ähnlich wie für das Verfahren von Siebträgern besteht auch für die Betätigung von Bypass-, Anfahr- und Umschaltventilen bei Anlagen, die geschmolzenen Kunststoff verarbeiten, die Anforderung, das zu bewegende Bauteil möglichst schnell verfahren zu können. Auch in diesen vorgenannten Fällen kann jedoch gegebenenfalls einen hoher Widerstand zu überwinden sein, der z. B. durch das Anhaften festgebackener Kunststoffreste bedingt sein kann. Verallgemeinernd werden daher nachfolgend die Bauteile wie Siebträger, Bypass-, Anfahr- und Umschaltventile auch jeweils als "bewegliches Element" bezeichnet.

Bei den bekannten Siebwechslern ist nachteilig, dass die Speicherhydraulik einen vergleichsweise teuren Hydraulikspeicher benötigt, der aufgrund des in ihm herrschenden Druckes einerseits in der Herstellung vergleichsweise teuer ist und der insbesondere eine regelmäßige mit erheblichen Folgekosten verbundene und in regelmäßigen zeitlichen Abständen durchzuführende technische Überprüfung erfordert.

Der Erfindung liegt die Aufgabe zugrunde, einen gattungsgemäßen Siebwechsler dahingehend zu verbessern, dass dieser mit möglichst geringen Unterhaltskosten betrieben werden kann.

Diese Aufgabe wird durch einen Siebwechsler mit den Merkmalen des Anspruchs 1 gelöst.

Die Erfindung schlägt mit anderen Worten vor, zwei Pumpen zu verwenden, die gleichzeitig betrieben werden können, wenn das bewegliche Element bewegt werden soll, wie z. B. der Siebträger im Falle eines Siebwechsels. Dabei ermöglicht eine erste Pumpe einen hohen hydraulischen Volumenstrom, der bei geringem Widerstand des Siebträgers eine schnelle Verfahrbarkeit des Siebträgers über eine vergleichsweise große Wegstrecke innerhalb kurzer Zeit ermöglicht. Diese erste Hydraulikpumpe ist daher als Volumenpumpe bezeichnet.

Liegt jedoch ein höherer Widerstand beim Verfahren des beweglichen Elementes vor, z. B. des erwähnten Siebträgers, so bewirkt die zweite Hydraulikpumpe, dass der Siebträger gegen diesen Widerstand problemlos verschoben werden kann. Hierzu ist die zweite Hydraulikpumpe als Hochdruckpumpe ausgelegt, die zwar einen geringen Volumenstrom zur Verfügung stellt als die Volumenpumpe, aber den Aufbau eines hohen Drucks ermöglicht.

Wenn beispielsweise zunächst ein hoher Anfahrwiderstand des Siebträgers zu überwinden ist, wird dieser Widerstand mit Hilfe der Hochdruckpumpe überwunden, so dass anschließend eine schnelle Verfahrbarkeit des Siebträgers durch beide Pumpen und insbesondere den hohen Volumenstrom der Volumenpumpe ermöglicht wird. Wenn umgekehrt am Ende des Verfahrweges der Widerstand des Siebträgers höher wird, so ist zunächst die schnelle Verfahrbarkeit des Siebträgers mittels der Volumenpumpe über den größten Teil der Wegstrecke sichergestellt, während es zum Schluss die Hochdruckpumpe ermöglicht, den Siebträger gegen den herrschenden Verfahrwiderstand in seine Endposition zu verfahren.

Vorschlagsgemäß ist ein Sperrventil vorgesehen, welches in der Versorgungsleitung zwischen der Volumenpumpe und dem Hydraulikzylinder angeordnet ist und schließlich ist eine Hochdruckleitung vorgesehen, welche von der Hochdruckpumpe ebenfalls zum Hydraulikzylinder führt. Dabei umgeht die Hochdruckleitung das Sperrventil, so dass bei gesperrtem Sperrventil der von der Hochdruckpumpe aufgebaute Druck nicht gegen die Volumenpumpe arbeitet, sondern ausschließlich auf den Hydraulikzylinder einwirkt. Nimmt der Druck innerhalb dieser Hochdruckleitung jedoch ab, beispielsweise weil der Siebträger vergleichsweise widerstandsarm verfahren werden kann, wird das Sperrventil geöffnet. Zusätzlich zu dem Volumenstrom der Hochdruckpumpe kann nun der im Vergleich zur Hochdruckpumpe größere Volumenstrom von der Volumenpumpe durch das geöffnete Sperrventil auf den Hydraulikzylinder einwirken und die schnelle Verfahrbarkeit des Siebträgers bei geringem Fahrwiderstand ermöglichen.

Vorschlagsgemäß kann daher auf einen hydraulischen Druckspeicher verzichtet werden; es ist lediglich ein druckloser Vorratsspeicher für das Hydraulikfluid erforderlich, der keinen aufwendigen Sicherheitsbestimmungen und Sicherheitsuntersuchungen unterliegt und aus dem die beiden Hydraulikpumpen versorgt werden.

Vorteilhaft kann der Siebträger als Flachschieber ausgestaltet sein. Insbesondere bei dieser Ausführungsform als Flachschieber sind, wenn zwei Siebe im Abstand voneinander angeordnet sind, die schnellen Verfahrwege erforderlich und bei Flachschiebern ist insbesondere der Verfahrwiderstand vergleichsweise hoch, zumindest auf bestimmten Abschnitten des Verfahrweges, so dass bei diesem Typ von Siebwechslern sowohl ein hoher Druck als auch eine hohe Volumenleistung für die hydraulische Bewegung des Siebträgers erforderlich sind.

Vorteilhaft können die beiden Hydraulikpumpen nicht unabhängig voneinander betrieben werden, sondern gleichzeitig von demselben Motor angetrieben werden, so dass sich hierdurch eine bauliche Vereinfachung und Kosteneinsparung ergibt. Vorteilhaft kann die Hochdruckleitung von der Hochdruckpumpe zur Versorgungsleitung führen und stromabwärts von dem Sperrventil in die Versorgungsleitung münden. Auf diese Weise sind nicht separate Leitungsanschlüsse an den Hydraulikzylinder einerseits für die Volumenleitung und andererseits für die Hochdruckleitung erforderlich, so dass bei einer bestehenden Anlagenkonstruktion keine Änderungen am Hydraulikzylinder erforderlich sind und die vorschlagsgemäße Ausgestaltung mit geringem technischen und wirtschaftlichen Aufwand verwirklicht werden kann.

Vorteilhaft kann das Sperrventil als Rückschlagventil ausgestaltet sein, so dass es selbsttätig den jeweils erforderlichen Schaltzustand einnimmt und auf eine vergleichsweise aufwendige Steuerung zur Ansteuerung des Sperrventils verzichtet werden kann. Dabei ist das Rückschlagventil derart ausgestaltet, dass es seine Offenstellung einnimmt, wenn der Druck auf der Seite der Volumenpumpe größer ist als der Druck auf Seiten der Hochdruckpumpe. Dies ist beispielsweise dann der Fall, wenn der Hydraulikzylinder sich vergleichsweise widerstandsarm verschieben lässt, so dass die vergleichsweise geringe Menge des von der Hochdruckpumpe geförderten Hydraulikfluids keinen Druckanstieg stromabwärts vom Sperrventil bewirkt. Erhöht sich jedoch der Widerstand des Hydraulikzylinders, so steigt der Druck stromabwärts vom Sperrventil an, so dass auf der Seite des Hydraulikzylinders nun ein Überdruck gegenüber dem von der Volumenpumpe aufgebauten Druck herrscht. Bei diesen Druckverhältnissen nimmt das als Rückschlagventil ausgestaltete Sperrventil automatisch seine Schließstellung ein, so dass nun die Hochdruckpumpe den hohen, auf den Hydraulikzylinder einwirkenden Druck aufbauen kann, um den Fahrwiderstand des Siebträgers zu überwinden.

Vorteilhaft kann die Versorgungsleitung stromabwärts von dem Sperrventil mit einem Entlastungsventil in Verbindung stehen. Wenn die Volumenpumpe gemeinsam oder jedenfalls gleichzeitig mit der Hochdruckpumpe angetrieben ist, ist sie dementsprechend auch eingeschaltet ist und bestrebt, Hydraulikfluid zu fördern, wenn das Sperrventil geschlossen ist. Um eine dabei auftretende Überlastung und daraus resultierende Schäden an der Volumenpumpe zu vermeiden, kann vorgesehen sein, dass bei geschlossenem Sperrventil das Hydraulikfluid in einer Art Kurzschluss-Kreislauf von der Volumenpumpe zurück in den das Hydraulikfluid aufnehmenden Vorratsbehälter gefördert wird. Hierzu führt von dem Entlastungsventil eine Rückflussleitung zu dem Vorratsbehälter.

Das Entlastungsventil öffnet bei einem Druck, der höchstens dem von der Volumenpumpe aufzubringenden Maximaldruck entspricht und jedenfalls bei einem Druck, welcher in der Versorgungsleitung herrscht, wenn das Sperrventil geschlossen ist und die Volumenpumpe eingeschaltet ist. Sobald das Sperrventil öffnet und daher der Druck in der Versorgungsleitung abnimmt, schließt das Entlastungsventil und die Volumenpumpe kann auf den Hydraulikzylinder einwirken.

Das Entlastungsventil ermöglicht es, die Volumenpumpe ohne die Gefahr einer Überlastung bzw. Beschädigung ständig mitlaufen zu lassen, so dass sehr kurze Umsteuerzeiten ermöglicht werden zwischen dem Hydraulikstrom, der von der Hochdruckpumpe oder von der Volumenpumpe zum Hydraulikzylinder fließt, verglichen mit einer hydraulischen Schaltung, bei welcher zum Schutz der Volumenpumpe die Volumenpumpe jedes Mal abgeschaltet würde, wenn das Sperrventil schließt, und jedes Mal erneut anlaufen würde, wenn das Sperrventil öffnet.

Ein Ausführungsbeispiel der Erfindung wird anhand der rein schematischen Darstellung näher erläutert.

Dabei ist mit 1 insgesamt eine hydraulische Pumpenanordnung in Form eines Hydraulikplans dargestellt, wobei die Aggregatsgrenze dieser hydraulischen Pumpenanordnung 1 mit einer strichpunktierten Linie 2 angedeutet ist und außerhalb dieser Aggregatsgrenze 2, von der Pumpenanordnung 1 beaufschlagt, ein Hydraulikzylinder 3 angedeutet ist, der zum Verschieben eines als Flachschieber ausgestalteten Siebträgers dient.

Die Pumpenanordnung 1 weist einen Vorratsbehälter 4 für Hydraulikfluid auf, der nicht als Drucktank ausgestaltet ist. Innerhalb des Vorratsbehälters 4 sind zwei Hydraulikpumpen angeordnet, die das Hydraulikfluid aus dem Vorratsbehälter 4 herauspumpen können: Erstens ist eine Volumenpumpe 5 vorgesehen, die beispielsweise eine Förderleistung von 80 l/min aufweist und zweitens ist eine Hochdruckpumpe 6 vorgesehen, die beispielsweise eine Förderleistung von 10 l/min aufweist, aber einen im Vergleich zur Volumenpumpe 5 deutlich höheren hydraulischen Druck aufzubauen vermag.

Beide Hydraulikpumpen sind gemeinsam durch einen einzigen Motor 7 angetrieben, wobei durch die vorschlagsgemäße Ausgestaltung der Pumpenanordnung 1 ein vergleichsweise kleiner Motor mit vergleichsweise geringer Leistung verwendet werden kann und auf einen hydraulischen Druckspeicher verzichtet werden kann. Denn zur Betätigung des Hydraulikzylinders 3 arbeitet die Pumpenanordnung 1 wie folgt: Durch den Motor 7 werden die Volumenpumpe 5 und die Hochdruckpumpe 6 gleichzeitig angetrieben. Die Volumenpumpe 5 erzeugt einen vergleichsweise großen hydraulischen Volumenstrom, der durch eine Versorgungsleitung 8 zum Hydraulikzylinder 3 fließt. In die Versorgungsleitung 8 ist ein Sperrventil 9 geschaltet, welches als Rückschlagventil ausgestaltet ist und durch den Volumenstrom von der Volumenpumpe 5 in seine Offenstellung gebracht wird.

Gleichzeitig mit der Volumenpumpe 8 wird auch die Hochdruckpumpe 6 betätigt, wobei deren Hochdruck-Volumenstrom über eine Hochdruckleitung 10 fließt und stromabwärts von dem Sperrventil 9, also in Fließrichtung dahinter, in die Versorgungsleitung 8 eingespeist wird. Wenn der Hydraulikzylinder 3 einen hohen Widerstand bietet, erhöht sich der Druck zwischen dem Hydraulikzylinder 3 und dem Sperrventil 9, so dass dieses in seine Schließstellung gebracht wird und nun der von der Hochdruckpumpe 6 aufgebaute Druck auf den Hydraulikzylinder 3 einwirken kann.

Der aus dem Hydraulikzylinder 3 verdrängte Anteil an Hydraulikflüssigkeit gelangt durch eine Rückflussleitung 11 in den Vorratsbehälter 4.

Ein Umschaltventil 12 ist vorgesehen, um den von den Hydraulikpumpen erzeugten Volumenstrom wahlweise einer von zwei Hin- und Rückleitungen 14 des Hydraulikzylinders 3 zuzuführen, so dass durch entsprechende Umschaltung wahlweise eine der beiden Leitungen 14 als Hinleitung und die andere als Rückleitung dienen kann, wobei durch Auswahl der jeweiligen Hinleitung 14 und der korrespondierenden Rückleitung 14 die Bewegungsrichtung des Hydraulikzylinders 3 bestimmt werden kann.

Die Versorgungsleitung 8 steht stromabwärts von dem Sperrventil 9 mit einem Entlastungsventil 15 in Verbindung, so dass die Volumenpumpe 8 bei geschlossenem Sperrventil 9 das Hydraulikfluid in einem Kreislauf zurück in den Vorratsbehälter 4 fördert, ohne dass das Hydraulikfluid zum Hydraulikzylinder 3 gelangt, so dass dieser Kreislauf als Kurzschluss-Kreislauf bezeichnet wird. Das Entlastungsventil 15 steht ausgangsseitig mit der Rückflussleitung 11 in Verbindung.

Rein beispielhaft wird davon ausgegangen, dass bei dem dargestellten Ausführungsbeispiel der Maximaldruck, den die Volumenpumpe 8 aufbringen kann, 140 bar beträgt, bei einem Volumenstrom von 80 l/min, und das die Hochdruckpumpe einen Maximaldruck von 280 bar bei einem Volumenstrom von 10 l/min aufbringen kann.

Das Entlastungsventil 15 öffnet bei einem einstellbaren, so genannten Schaltdruck, der auf 140 bar oder weniger eingestellt ist, wobei dieser Schaltdruck in der in der Versorgungsleitung 8 herrscht, wenn das Sperrventil 9 geschlossen ist und die Volumenpumpe 8 eingeschaltet ist. Sobald das Sperrventil 9 öffnet und daher der Druck in der Versorgungsleitung 8 abnimmt und unter den Wert Schaltdruckes absinkt, schließt das Entlastungsventil 15 wieder. Der Kurzschluss wird beendet und die Volumenpumpe 8 wirkt wieder auf den Hydraulikzylinder 3 ein.

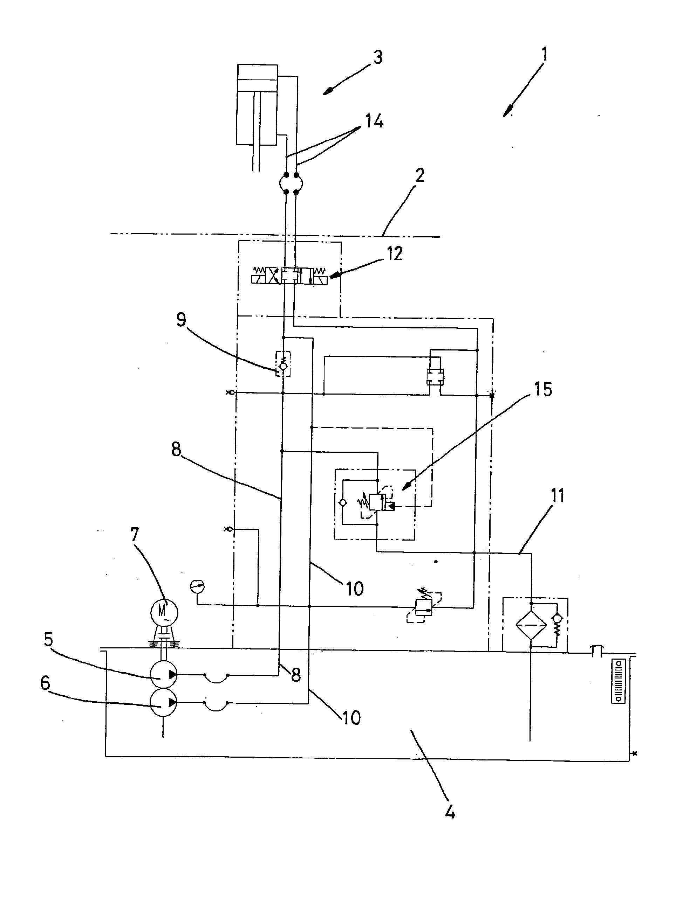

Die Pumpenanordnung 1 ist ansonsten in vielen Bereichen ähnlich wie aus der Praxis vorbekannte Pumpenanordnungen ausgestaltet, so dass nicht sämtliche Elemente der in der Zeichnung dargestellten Pumpenanordnung 1 näher erläutert werden müssen.

## Patentansprüche

1. Siebwechsler einer fließfähigen Kunststoff verarbeitenden Anlage,
• mit einem zwischen zwei Positionen beweglichen Element,
wobei das bewegliche Element mittels eines Hydraulikzylinders beweglich ist,
• und mit einem Motor, der eine Hydraulikpumpe antreibt,
wobei von der Hydraulikpumpe eine hydraulische Versorgungsleitung zu dem Hydraulikzylinder führt,
**gekennzeichnet durch**
• eine erste, als Volumenpumpe (5) bezeichnete Hydraulikpumpe,
• eine zweite, als Hochdruckpumpe (6) bezeichnete Hydraulikpumpe,
wobei die Hochdruckpumpe (6) eine im Vergleich zur Volumenpumpe (5) geringere Volumenleistung aufweist, jedoch einen vergleichsweise höheren Pumpendruck aufbaut,
• ein Sperrventil (9) in der Versorgungsleitung (8), welches die hydraulische Verbindung zwischen der Volumenpumpe (5) und dem Hydraulikzylinder (3) wahlweise freigibt oder unterbricht,
• sowie eine Hochdruckleitung (10), welche das Hydraulikfluid von der Hochdruckpumpe (6) an dem Sperrventil (9) vorbei zu dem Hydraulikzylinder (3) führt.

2. Siebwechsler nach Anspruch 1, **dadurch gekennzeichnet, dass** die Volumenpumpe (5) und die Hochdruckpumpe (6) gleichzeitig von demselben Motor (7) angetrieben sind.

3. Siebwechsler nach Anspruch 1 oder 2, **dadurch gekennzeichnet, dass** die Hochdruckleitung (10) von der Hochdruckpumpe (6) zu der Versorgungsleitung (8) führt und stromabwärts von dem Sperrventil (9) in die Versorgungsleitung (8) mündet.

4. Siebwechsler nach einem der vorhergehenden Ansprüche, **dadurch gekennzeichnet, dass** das Sperrventil (9) als Rückschlagventil ausgestaltet ist,
welches bei einem auf der Seite der Volumenpumpe (5) herrschenden Überdruck seine Offenstellung einnimmt, und bei einem auf der Seite des Hydraulikzylinders (3) herrschenden Überdruck seine Schließstellung einnimmt.

5. Siebwechsler nach einem der vorhergehenden Ansprüche, **dadurch gekennzeichnet, dass** das bewegliche Element ein Siebträger ist.

6. Siebwechsler nach Anspruch 5, **dadurch gekennzeichnet, dass** der Siebträger als Flachschieber ausgestaltet ist.

7. Siebwechsler nach einem der vorhergehenden Ansprüche, **dadurch gekennzeichnet,**
**dass** die Versorgungsleitung (8) stromabwärts von dem Sperrventil (9) mit einem Entlastungsventil (15) in Verbindung steht,
von dem Entlastungsventil (15) eine Rückflussleitung (11) zu einem Vorratsbehälter (4) mit Hydraulikfluid führt,
und das Entlastungsventil (15) bei einem Druck öffnet, der in der Versorgungsleitung (8) bei geschlossenem Sperrventil (9) und eingeschalteter Volumenpumpe (5) herrscht und der höchstens dem von der Volumenpumpe (5) aufzubringenden Maximaldruck entspricht.

8. Pumpenanordnung (1) eines Siebwechslers, wobei die Pumpenanordnung (1) unter Verzicht auf einen hydraulischen Druckspeicher nach einem der vorhergehenden Ansprüche ausgestaltet ist.

## Claims

1. Screen changer for a flowable-plastic processing system with an element which can be moved between two positions, where this movable element is moved by means of a hydraulic cylinder, and with a motor which drives a hydraulic pump, where a hydraulic supply pipe leads from the hydraulic pump to the hydraulic cylinder,
**characterised by** a first hydraulic pump described as the volume pump (5), a second hydraulic pump described as a high-pressure pump (6), where the high-pressure pump (6) has a lower volume capacity compared to the volume pump (5), but which achieves a comparatively high pumping pressure,
a stop valve (9) in the supply pipe (8) which can open or close the hydraulic connection between the volume pump (5) and the hydraulic cylinder (3) as required, and a high-pressure pipe (10) which feeds the hydraulic fluid from the high-pressure pump (6) past the stop valve (9) to the hydraulic cylinder (3),

2. Screen changer in accordance with claim 1, **characterised in that** the volum pump (5) and the high-pressure pump (6) are powered simultaneously by the same motor (7).

3. Screen changer in accordance with claim 1 or claim 2, **characterised in that** the high-pressure pipe (10) leads from the high-pressure pump (6) to the supply pipe (8) and opens into the supply pipe (8) downstream from the stop valve (9).

4. Screen changer in accordance with any of the aforementioned claims, **characterised in that** the stop valve (9) is formed as a back-pressure valve, which opens in case of excess pressure on the side of the volume pump (5) and closes in case of excess pressure on the side of the hydraulic cylinder (3).

5. Screen changer in accordance with any of the aforementioned claims, **characterised in that** the movable element is a screen carrier.

6. System in accordance with claim 5, **characterised in that** the screen carrier is formed as a flat slide.

7. Screen changer in accordance with any of the aforementioned claims, **characterised in that** the supply pipe (8) is connected to a pressure-relief valve (15) downstream from the stop valve (9), a return-flow pipe (11) leads from the pressure-relief valve (15) to a reservoir tank (4) with hydraulic fluid, and the pressure-relief valve (15) opens at a pressure which prevails in the supply pipe (8) when the stop valve (9) is closed and the volume pump (5) is switched on, and which equals at most the maximum pressure provided by the volume pump (5).

8. Pump arrangement (1) for a screen changer, where the pump arrangement (1) is formed in accordance with any of the aforementioned claims but without a hydraulic accumulator.

## Revendications

1. Changeur de filtre dans un système de traitement de plastique coulable comprenant un élément déplaçable entre deux positions, sachant que l'élément mobile peut se déplacer au moyen d'un vérin hydraulique, et comprenant un moteur qui entraîne une pompe hydraulique, sachant que de la pompe hydraulique une conduite d'alimentation hydraulique aboutit au vérin hydraulique,
**caractérisé par** une première pompe hydraulique appelée pompe volumétrique (5), par une deuxième pompe hydraulique appelée pompe haute pression (6), sachant que la pompe haute pression (6) présente un débit volumique inférieur à celui de la pompe volumétrique (5), mais qu'elle génère une pression comparativement plus élevée,
une vanne de barrage (9) dans la conduite d'alimentation (8) qui au choix permet ou interrompt la jonction hydraulique entre la pompe volumétrique (5) et le vérin hydraulique (3), ainsi qu'une conduite haute pression (10) qui conduit le fluide hydraulique de la pompe haute pression (6) vers le vérin hydraulique (3) en contournant la vanne de barrage (9),

2. Changeur de filtre selon la revendication 1, **caractérisé en ce que** la pompe volumétrique (5) et la pompe haute pression (6) sont entraînées par le même moteur (7).

3. Changeur de filtre selon la revendication 1 ou 2, **caractérisé en ce que** la conduite haute pression (10) va de la pompe haute pression (6) vers la conduite d'alimentation (8) et qu'elle débouche en aval de la vanne de barrage (9) dans la conduite d'alimentation (8).

4. Changeur de filtre selon l'une des revendications précédentes, **caractérisé en ce que** la vanne de barrage (9) est configurée en vanne à clapet antiretour qui, lorsque règne une surpression sur le côté de la pompe volumétrique (5), se rend en position ouverte et qui, lorsque règne une surpression sur le côté du vérin hydraulique (3), se rend en position fermée.

5. Changeur de filtre selon l'une des revendications précédentes, **caractérisé en ce que** l'élément mobile est un support de filtre.

6. Changeur de filtre selon la revendication 5, **caractérisé en ce que** le support de filtre est configuré en tiroir plat.

7. Changeur de filtre selon l'une des revendications précédentes, **caractérisé en ce que** la conduite d'alimentation (8) est connectée en aval de la vanne de barrage (9) avec une vanne de délestage (15), **en ce que** de la vanne de délestage (15) part une conduite de reflux (11) vers un réservoir (4) servant à accumuler le fluide hydraulique, et **en ce que** la vanne de délestage (15) s'ouvre en présence d'une pression régnant dans la conduite d'alimentation (8) lorsque la vanne de barrage (9) est fermée et que la pompe volumétrique (5) est allumée, et que cette pression correspond au maximum à la pression maximale que doit développer la pompe volumétrique (5).

8. Agencement de pompes (1) dans un changeur de filtre, sachant que l'agencement de pompe (1) est configuré en renonçant à un accumulateur de pression hydraulique selon l'une des revendications précédentes.
